# EUROPEAN PATENT APPLICATION

(11) **EP 4 603 291 A1**
(43) Date of publication of application: **20.08.2025**
(21) Application number: 24217007.4
(22) Date of filing: 03.12.2024
(51) Int. Cl.: B41J 11/00, B41J 11/46, G06K 15/02

(54) **PRINTING APPARATUS**

(30) Priority: 16.02.2024 JP 2024022449
(71) Applicant: Miyakoshi Printing Machinery Co., Ltd., Narashino-shi Chiba 275-0016 (JP)
(72) Inventor: KOSAKA, Hidenori, Chiba 276-0046 (JP); EBUCHI, Osamu, Chiba 276-0046 (JP); UENO, Ryoma, Chiba 276-0046 (JP); UCHIYAMA, Ryo, Chiba 276-0046 (JP)
(74) Representative: Goddar, Heinz J.

(57) **Abstract**

To provide a printing apparatus capable of automatically calculating an expansion/contraction ratio and making the size of a print image at the time of recovery substantially match the size of original print data. The present invention provides a printing apparatus 100 including a supply section 1, a printing-related section 3, a recovery section 4, an imaging section 5, and a control section 6, in which print data is first print data DT1 or second print data DT2, the control section 6 includes first transmission means 61 for transmitting printing start commands, respectively, to printing sections 30a and 30b, imaging means 62 for causing the imaging section 5 to image a print medium X1 to acquire imaging data DT3, measurement means 63 for acquiring an imaging measurement value from the imaging data DT3, calculation means 64 for calculating an expansion/contraction ratio from a reference measurement value and the imaging measurement value, correction means 65 for expanding and contracting a print image on the basis of the expansion/contraction ratio to generate the second print data DT2, and second transmission means 66 for transmitting printing start commands, respectively, to the printing sections 30a and 30b on the basis of the second print data DT2, and both respective error ranges of a distance in the conveyance direction and a distance in the width direction between a print image 7 in the first print data DT1 and a print image 9 printed on the basis of the second print data DT2 are within ± 1.0 mm.

## Description

### TECHNICAL FIELD OF THE INVENTION

0001 The present invention relates to a printing apparatus for applying a print image to a medium on the basis of print data, and more specifically, to a printing apparatus capable of making the size of a print image at the time of recovery substantially match the size of original print data using an automatic expansion/contraction correction function.

### BACKGROUND OF THE INVENTION

0002 In the field of printing, a printing apparatus is an apparatus that subjects a medium to printing on the basis of print data while conveying the medium and fixes a print image. In the printing apparatus, the medium is usually pulled toward the recovery section side by applying a predetermined tension to the medium, thereby causing a phenomenon that the medium extends at the time of conveyance.

This results in a phenomenon that the medium contracts in a width direction.

In order to fix the print image, an ink is dried or cured, thereby also causing the medium to expand and contract.

From the foregoing, there occurs a problem that the size of original print data and the size of a print image at the time of recovery actually printed do not match each other.

0003 On the other hand, the original print data is previously corrected.

For example, when image data is printed on a medium, there has been known an image printing system for measuring the length of a reference line actually printed on the medium on the basis of reference data in a conveyance direction of the medium by a user using a scale or the like, comparing the length of the reference line with a calculational length of the reference line to calculate an expansion/contraction ratio of an image, and correcting the image data such that a corresponding image is printed at a calculational position on the medium (see, e.g., Japanese Patent Laid-Open No. 11-245472).

There has been known a printing apparatus including reference print data storage means for storing reference print data to be printed in a predetermined reference length range in a sub-scanning direction when printing is performed in an atmosphere at a reference temperature, printing mode setting means for setting a predetermined printing mode, first printing control means for printing reference print data stored in the reference print data storage means on a sheet when the predetermined printing mode is set by the printing mode setting means, measurement length input means for a user measuring a measurement length in the sub-scanning direction of the reference print data printed on the sheet by the first printing control means and inputting a value of the measurement length, calculation means for calculating an enlargement ratio by which print data to be printed is enlarged on the basis of the value of the measurement length inputted by the measurement length input means and a value of a reference length of the reference print data, print data processing means for performing processing for enlarging the print data to be printed in the sub-scanning direction using the enlargement ratio calculated by the calculation means, and second printing control means for printing the print data processed by the print data processing means on the sheet (see, e.g., Japanese Patent Laid-Open No. 2011-245868).

### SUMMARY OF THE INVENTION

0005 However, each of a printing apparatus using the image printing method disclosed in Japanese Patent Laid-Open No. 11-245472 and the printing apparatus disclosed in Japanese Patent Laid-Open No. 2011-245868 has a disadvantage that a human error may occur because a person measures a measurement value.

It cannot necessarily be said that a skilled person measures the measurement value, which may result in a deterioration in measurement accuracy.

The printing apparatus needs to be stopped by an amount of measurement by the person, resulting in a deterioration in productivity.

0006 The present invention has been made in view of the above-described circumstances, and is directed to providing a printing apparatus capable of automatically calculating an expansion/contraction ratio and making the size of a print image at the time of recovery substantially match the size of original print data.

0007 The inventors have intensively studied to solve the above-described problem, and have considered actually fixing a print image and then imaging the print image using first print data having a mark put on the print image, calculating an expansion/contraction ratio from a reference measurement value and an imaging measurement value, and correcting the print image on the basis of the expansion/contraction ratio.

To achieve this, the inventors have found that the above-described problem can be solved by causing a control section to include first transmission means, imaging means, measurement means, calculation means, correction means, and second transmission means, thereby completing the present invention. 0008 The present invention provides a printing apparatus including a supply section for supplying a medium, a printing-related section including a printing section for printing at least a print image on the medium on the basis of print data and a fixing section for fixing the print image on the medium to obtain a print medium, a recovery section for recovering the print medium, an imaging section, arranged between the printing-related section and the recovery section, for imaging the print medium, a control section for controlling the printing, in which the print data is first print data or second print data, the control section includes at least first transmission means for transmitting a printing start command to the printing section on the basis of first print data having a plurality of marks put on the print image, imaging means for causing the imaging section to image the print medium to acquire imaging data, measurement means for measuring a distance in a conveyance direction between the marks and a distance in a width direction between the marks in the imaging data, to acquire an imaging measurement value including respective values of the distances, calculation means for calculating an expansion/contraction ratio from a reference measurement value including respective values of a distance in the conveyance direction between the marks and a distance in the width direction between the marks in the first print data and the imaging measurement value, correction means for expanding and contracting the print image on the basis of the expansion/contraction ratio to generate the second print data, and second transmission means for transmitting a printing start command to the printing section on the basis of the second print data, and both respective error ranges of a distance in the conveyance direction and a distance in the width direction between the print image in the first print data and the print image printed on the basis of the second print data are within ± 1.0 mm.

0009 In the printing apparatus according to the present invention, it is preferable that the calculation means calculates an expansion/contraction ratio X1 in the conveyance direction by X1 = A1 / B1 from a value A1 of the distance in the conveyance direction between the marks in the first print data and a value B1 of the distance in the conveyance direction between the marks in the imaging data, and calculates an expansion/contraction ratio X2 in the width direction by X2 = A2 / B2 from a value A2 of the distance in the width direction between the marks in the first print data and a value B2 of the distance in the width direction between the marks in the imaging data, the correction means calculates a value D1 of a distance in the conveyance direction of the print image in the second print data by D1 = C1 × X1 from a value C1 of a distance in the conveyance direction of the print image in the first print data and the expansion/contraction ratio X1 in the conveyance direction, calculates a value D2 of a distance in the width direction of the print image in the second print data by D2 = C2 × X2 from a value C2 of a distance in the width direction of the print image in the first print data and the expansion/contraction ratio X2 in the width direction, and expands or contracts the print image in the first print data to correspond to the value D1 of the distance in the conveyance direction of the print image in the second print data and the value D2 of the distance in the width direction of the print image in the second print data, to generate the second print data.

0010 The present invention provides a printing apparatus including a supply section for supplying a medium, a printing-related section including a first printing section and a second printing section for printing at least a print image on the medium on the basis of print data and a first fixing section and a second fixing section for fixing the print image on the medium to obtain a print medium, a recovery section for recovering the print medium, an imaging section, arranged between the printing-related section and the recovery section, for imaging the print medium, and a control section for controlling the printing, in which the first printing section, the first fixing section, the second printing section, and the second fixing section are arranged in this order from the upstream side in the printing-related section, the print data is first print data or second print data including first correction data or second correction data, the control section includes at least first transmission means for transmitting printing start commands, respectively, to the first printing section and the second printing section on the basis of first print data having a plurality of marks each including a first mark and a second mark put on the print image, imaging means for causing the imaging section to image the print medium to acquire imaging data, measurement means for measuring a distance in a conveyance direction between the first marks printed by the first printing section and a distance in a width direction between the first marks in the imaging data to acquire a first imaging measurement value including respective values of the distances, and measuring a distance in the conveyance direction between the second marks printed by the second printing section and a distance in the width direction between the second marks in the imaging data to acquire a second imaging measurement value including respective values of the distances, calculation means for calculating a first expansion/contraction ratio for the first printing section from a first reference measurement value including respective values of a distance in the conveyance direction between the first marks and a distance in the width direction between the first marks in the first print data and the first imaging measurement value and calculating a second expansion/contraction ratio for the second printing section from a second reference measurement value including respective values of a distance in the conveyance direction between the second marks and a distance in the width direction between the second marks in the first print data and the second imaging measurement value, correction means for expanding and contracting data of a portion taken charge of by the first printing section in the print image on the basis of the first expansion/contraction ratio to generate the first correction data and expanding or contracting data of a portion taken charge of by the second printing section in the print image on the basis of the second expansion/contraction ratio to generate the second correction data, and second transmission means for transmitting a printing start command to the first printing section on the basis of the first correction data and transmitting a printing start command to the second printing section on the basis of the second correction data, and both respective error ranges of a distance in the conveyance direction and a distance in the width direction between the print image in the first print data and the print image printed on the basis of the second print data are within ± 1.0 mm.

0011 In the printing apparatus according to the present invention, it is preferable that the calculation means calculates a first expansion/contraction ratio X11 in the conveyance direction by X11 = A11 / B11 from a value A11 of the distance in the conveyance direction between the first marks in the first print data and a value B11 of the distance in the conveyance direction between the first marks in the imaging data, calculates a first expansion/contraction ratio X12 in the width direction by X12 = A12 / B12 from a value A12 of the distance in the width direction between the first marks in the first print data and a value B12 of the distance in the width direction between the first marks in the imaging data, calculates a second expansion/contraction ratio X21 in the conveyance direction by X21 = A21 / B21 from a value A21 of the distance in the conveyance direction between the second marks in the first print data and a value B12 of the distance in the conveyance direction between the second marks in the imaging data, and calculates a second expansion/contraction ratio X22 in the width direction by X22 = A22 / B22 from a value A22 of the distance in the width direction between the second marks in the first print data and a value B22 of the distance in the width direction between the second marks in the imaging data, and the correction means calculates a value D11 of a distance in the conveyance direction of the print image in the first correction data by D11 = C11 × X11 from a value C11 of a distance in the conveyance direction of data of a portion taken charge of by the first printing section in the print image in the first print data and the first expansion/contraction ratio X11 in the conveyance direction, calculates a value D12 of a distance in the width direction of the print image in the first correction data by D12 = C12 × X12 from a value C12 of a distance in the width direction of the data of the portion taken charge of by the first printing section in the print image in the first print data and the first expansion/contraction ratio X12 in the width direction, and expands or contracts the data of the portion taken charge of by the first printing section in the print image in the first print data to correspond to the value D11 of the distance in the conveyance direction of the print image in the first correction data and the value D12 of the distance in the width direction of the print image in the first correction data to generate the first correction data, calculates a value D21 of a distance in the conveyance direction of the print image in the second correction data by D21 = C21 × X21 from a value C21 of a distance in the conveyance direction of data of a portion taken charge of by the second printing section in the print image in the first print data and the second expansion/contraction ratio X21 in the conveyance direction, calculates a value D22 of a distance in the width direction of the print image in the second correction data by D22 = C22 × X22 from a value C22 of a distance in the width direction of the data of the portion taken charge of by the second printing section in the print image in the first print data and the second expansion/contraction ratio X22 in the width direction, and expands or contracts the data of the portion taken charge of by the second printing section in the print image in the first print data to correspond to the value D21 of the distance in the conveyance direction of the print image in the second correction data and the value D22 of the distance in the width direction of the print image in the second correction data to generate the second correction data.

0012 In the printing apparatus according to the present invention, it is preferable that the marks are respectively provided at four corners of the print image in the first print data.

0013 In the printing apparatus according to the present invention, it is preferable that the marks are respectively provided at positions of the four notched corners of the print image in the first print data.

0014 In the printing apparatus according to the present invention, it is preferable that the marks are respectively provided at positions of the four notched corners of the print image, a margin is provided between each of the marks and the print image, and a shortest distance between each of the marks and the print image is 10 mm or more.

0015 In the printing apparatus according to the present invention, it is preferable that each of the marks includes at least a horizontal line for measuring a distance in the conveyance direction and a vertical line for measuring a distance in the width direction.

0016 In the printing apparatus according to the present invention, it is preferable that the first print data is obtained by putting a plurality of marks and an accessory on the print image, the accessory has an upper refresh line provided above the horizontal line on the upper side, a plurality of intermediate refresh lines equally spaced apart from one another between the horizontal line on the upper side and the horizontal line on the lower side, and the plurality of marks and the accessory are printed in the same color.

0017 The printing apparatus according to the present invention includes the supply section, the printing-related section, and the recovery section. Accordingly, the medium is continuously supplied, whereby the print image can be printed on the medium, fixed thereon, and recovered.

At this time, the printing apparatus further includes the imaging section and the control section, and the control section includes the first transmission means, the imaging means, the measurement means, and the calculation means, so that the expansion/contraction ratio can be automatically calculated.

This makes it possible to exclude a human error in the printing apparatus.

Measurement between the marks is performed by the control section, resulting in an improvement in measurement accuracy. Time and effort for a person to perform measurement can be saved, thereby making it possible to improve productivity.

0018 In the printing apparatus, the control section further includes the correction means and the second transmission means, so that the print image can be automatically expanded and contracted on the basis of the expansion/contraction ratio to generate the second print data.

Therefore, the printing apparatus has an automatic expansion/contraction correction function for automatically measuring the expansion/contraction ratio and correcting the print data on the basis of the expansion/contraction ratio.

As needed, the automatic calculation of the
expansion/contraction ratio and the correction of the print data based thereon (hereinafter referred to as "automatic expansion and contraction correction") may be performed only once, or the automatic expansion and contraction correction may be repeatedly performed.

The respective error ranges of the distance in the conveyance direction and the distance in the width direction are within the above-described range, thereby making it possible to set the size of the print image at the time of recovery to a desired size.

That is, it is possible to make the size of the print image at the time of recovery substantially match the size of original print data.

0019 Here, in the printing-related section, the printing is performed with a tension applied, and the print image is further fixed, thereby making it easiest for the medium to expand and contract.

Accordingly, in the printing apparatus, the imaging section is arranged between the printing-related section and the recovery section.

This makes it possible to calculate the expansion/contraction ratio sufficiently considering the expansion and contraction of the medium in in the printing-related section in the printing apparatus.

0020 In the printing-related section, the
expansion/contraction ratio also varies depending on an amount of ink to be used to print the print image.

Accordingly, in the printing apparatus, print data having a plurality of marks put on the print image itself can be adopted as the first print data.

That is, while only the marks may be printed to measure the distance between the marks, the print image itself is intentionally printed, thereby making it possible to calculate the expansion/contraction ratio considering an influence of the ink in the printing of the print image.

0021 In the printing apparatus according to the present invention, when the printing-related section includes the first printing section, the first fixing section, the second printing section, and the second fixing section, and are arranged in this order, the first expansion/contraction ratio in the first printing section and the second expansion/contraction ratio in the second printing section are calculated from the one imaging data.

The first correction data is generated by expanding or contracting the data of the portion taken charge of by the first printing section in the print image in the first print data on the basis of the first expansion/contraction ratio, and the second correction data is generated by expanding or contracting the data of the portion taken charge of by the second printing section in the print image in the first print data on the basis of the second expansion/contraction ratio, thereby making it possible to make the size of the print image at the time of recovery substantially match the size of the original print data in the same manner as above even when the printing-related section includes the two printing sections and the two fixing sections.

The printing-related section includes the first printing section and the second printing section, thereby making it possible to perform multicolor printing, back printing with a white ink, and the like.

0022 With the printing apparatus according to the present invention, the calculation means calculates the expansion/contraction ratio on the basis of the above-described equation, and the correction means corrects the print image on the basis of the above-described equation, thereby making it possible to efficiently make the size of the print image at the time of recovery substantially match the size of the original print data.

0023 In the printing apparatus according to the present invention, when the marks in the first print data are respectively provided at the four corners of the print image, the expansion/contraction ratio can be calculated with higher accuracy.

0024 In the printing apparatus according to the present invention, when the marks are respectively provided at the positions of the four notched corners of the print image, the marks in the imaging data are easily detected, thereby making it possible to measure the distance between the marks with higher accuracy.

The width of the medium can be made as small as possible to match the size of the print image.

0025 In the printing apparatus according to the present invention, while the size of the medium may increase in the first fixing section when the printing-related section includes the first printing section and the second printing section, the marks are easily detected by providing the margin in the above-described range between each of the marks and the print image, thereby making it possible to measure the distance between the marks with higher accuracy.

When the second mark is printed by the second printing section, the second mark can be prevented from overlapping a print of the portion taken charge of by the first printing section in the print image.

0026 In the printing apparatus according to the present invention, when each of the marks includes the horizontal line and the vertical line, the marks in the imaging data are easily detected, thereby making it possible to measure the distance between the marks with higher accuracy.

At this time, the first print data has the accessory and the plurality of marks and the accessory are printed in the same color, whereby a nozzle can be prevented from being clogged when the plurality of marks are printed.

### BRIEF DESCRIPTIONS OF THE DRAWINGS

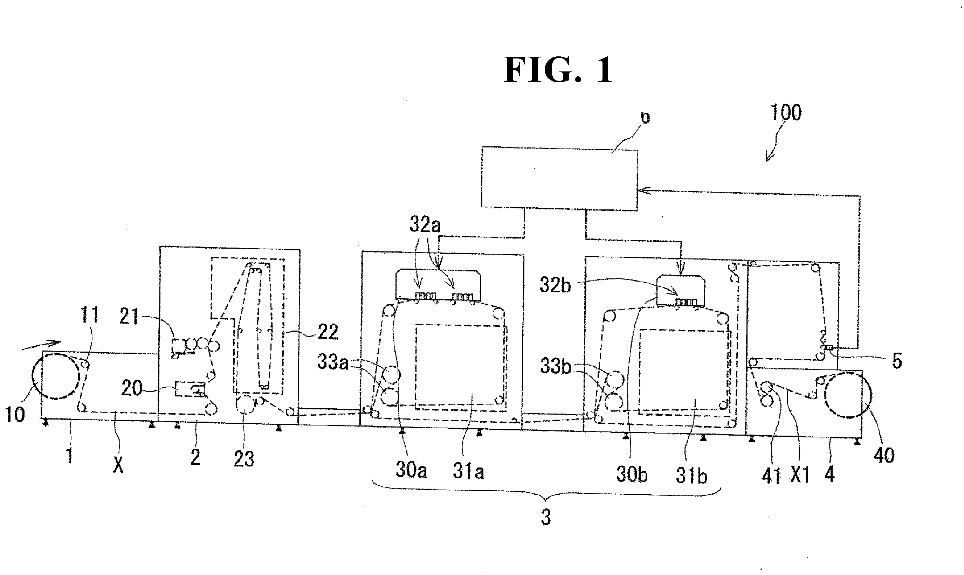

0027 FIG. 1 is a schematic side view illustrating a first embodiment of a printing apparatus according to the present invention;
FIG. 2 is a block diagram for describing a control section in the printing apparatus according to the first embodiment;
FIG. 3 is a diagram illustrating first print data based on which printing is performed in the printing apparatus according to the first embodiment;
FIG. 4 is a diagram illustrating imaging data in a print medium when printing is performed using the first print data illustrated in FIG. 3;
FIG. 5 is a diagram for describing generation of second print data by correction means in the printing apparatus according to the first embodiment;
FIG. 6 is a flowchart for describing automatic expansion and contraction correction in the printing apparatus according to the first embodiment;
FIG. 7 is a schematic side view illustrating a second embodiment of the printing apparatus according to the present invention;
FIG. 8 is a diagram illustrating first print data based on which printing is performed in a printing apparatus according to a second embodiment;
FIG. 9 is a diagram illustrating imaging data in a print medium when printing is performed using the first print data illustrated in FIG. 8; and
FIG. 10 is a diagram illustrating first print data based on which printing is performed in a printing apparatus according to another embodiment.

### DESCRIPTIONS OF THE PREFERRED EMBODIMENTS

0028 Preferred embodiments of the present invention will be described in detail below with reference to the drawings, as needed.

In the drawings, the same elements are respectively assigned the same reference numerals, and overlapping descriptions will be omitted.

A relationship among upper, lower, left, and right positions, for example, is based on a positional relationship illustrated in the drawings unless otherwise noted.

Further, dimensional ratios in the drawings are not limited to illustrated ratios.

0029 A printing apparatus according to the present invention is an apparatus for applying a print image on a medium on the basis of print data.

In the printing apparatus, the medium is not particularly limited, but paper, a film, a fabric, a non-woven fabric, rubber, a metal, or the like can be adopted.

Among these, the medium is preferably a film that easily expands and contracts due to a tension or the like.

In this case, an effect of the present invention can be fully enjoyed.

The medium may be in an elongated shape or cut to a predetermined size.

The medium preferably has an elongated shape. In this case, an effect of the present invention can be fully enjoyed.

A print image includes patterns, characters, colors, or their combinations, and the size thereof is not particularly limited.

As a printing system, an on-demand type inkjet system such as a piezo system or a thermal system can be preferably adopted.

As a printing head system, a serial head system or a line head system can be adopted.

In the printing apparatus according to the present embodiment, the line head system is adopted.

0030 In this specification, "upstream" means "upstream" in a conveyance direction of a medium, and "downstream" means "downstream" in the conveyance direction of the medium.

The "print medium" means one obtained by printing and fixing a print image on the above-described medium.

That is, a medium that has passed through the printing-related section 3 is a print medium.

### 0031 (First Embodiment)

FIG. 1 is a schematic side view illustrating a first embodiment of a printing apparatus according to the present invention. The printing apparatus according to the first embodiment is an example in which an elongated medium is adopted and a line-type inkjet system is adopted.

As illustrated in FIG. 1, a printing apparatus 100 according to the first embodiment includes a supply section 1 for supplying a medium X, a pretreatment section 2 for subjecting the medium X to pretreatment, a printing-related section 3 including a first printing section 30a and a second printing section 30b for printing at least a print image on the medium X on the basis of print data and a first fixing section 31a and a second fixing section 31b for fixing the print image on the medium X to obtain a print medium X1, a recovery section 4 for recovering the print medium X1, an imaging section 5, arranged between the printing-related section 3 and the recovery section 4, for imaging the print medium X1, and a control section 6 for controlling printing.

0032 In the printing apparatus 100, the medium X is continuously fed by the supply section 1.

First, the medium X is subjected to pretreatment by the pretreatment section 2.

Then, the print image is continuously printed on the medium X by the printing-related section 3, and the print image is fixed by drying, to obtain the print medium X1.

The print medium X1 is wound and recovered by the recovery section 4.

Therefore, in the printing apparatus 100, it is possible to continuously obtain the print medium X1 by providing the medium X with the print image.

0033 The supply section 1 is a site for supplying, from a supply roll 10 around which the elongated medium X is wound in a roll shape, the medium X toward the downstream side.

In the supply section 1, the medium X is sandwiched between a feed roller 11 and a nip roller (not illustrated), and the feed roller 11 is driven to rotate by a driving motor (not illustrated), thereby positively feeding the medium X.

At this time, a rotational resistance is applied to the supply roll 10 by a powder brake (not illustrated), so that a tension having a value corresponding to the magnitude of the rotational resistance (a brake force) is applied to the medium X.

0034 The pretreatment section 2 is a site for subjecting the medium X to pretreatment for, for example, forming an ink receiving layer.

The pretreatment section 2 includes a corona treatment device 20 for subjecting the medium X to surface modification treatment (corona treatment), a coater treatment device 21 for applying an ink receiving liquid to the medium X using a flexographic system, and a dryer 22 for drying the medium X to which the ink receiving liquid is applied and forming the ink receiving layer.

The pretreatment section 2 has a cooling roller 23 downstream of the dryer 22. Thus, the medium X is cooled.

0035 The printing-related section 3 includes the first printing section 30a and the second printing section 30b for printing a print image, a mark, and the like (first print data described below) or a print image (second print data described below) on the medium X on the basis of the print data and the first fixing section 31a and the second fixing section 31b for fixing the print image on the medium X by drying to obtain the print medium X1.

In the printing-related section 3, the first printing section 30a, the first fixing section 31a, the second printing section 30b, and the second fixing section 31b are arranged in that order from the upstream side.

Accordingly, the print image printed by the first printing section 30a is fixed by the first fixing section 31a, and the print image printed by the second printing section 30b is fixed by the second fixing section 31b.

The printing-related section 3 has a cooling roller 33a downstream of the first fixing section 31a, and has a cooling roller 33b downstream of the second fixing section 31b.

Accordingly, the medium X that has passed through the first fixing section 31a and the second fixing section 31b is cooled. 0036 In the printing apparatus 100, a print image is completed by printing based on data of a portion taken charge of by the first printing section 30a and printing based on data taken charge of by the second printing section 30b.

Marks, for example, include a first mark printed by the first printing section 30a, a second mark printed by the second printing section 30b, an accessory printed by the first printing section 30a and the second printing section 30b, and the like.

Details of these will be described below.

0037 The first printing section 30a has line heads 32a capable of printing an ink, and the second printing section 30b has line heads 32b capable of printing an ink.

As such an ink, a water-based ink, an oil-based ink, or the like is used.

Specifically, the first printing section 30a has the line heads 32a capable of printing a yellow ink, a magenta ink, a cyan ink, and a black ink, and the second printing section 30b has the line heads 32b capable of printing a white ink.

In this case, a full-color print image, for example, is printed by the first printing section 30a, and a print image with a white ink is then printed by the second printing section 30b, thereby making it possible to form a so-called back printing print image.

A print image with a white ink is printed by the first printing section 30a, and a full-color print image is then printed by the second printing section 30b, thereby making it possible to form a so-called surface printing print image.

0038 The first fixing section 31a and the second fixing section 31b are each a hot air dryer that blows hot air onto the medium X to which the print image is applied and fixes the print image.

Accordingly, the first fixing section 31a and the second fixing section 31b each apply a thermal energy sufficient to dry the ink to the medium X.

At this time, a liquid component contained in the ink vaporizes by absorbing a predetermined thermal energy.

That is, an amount of the thermal energy to be applied to the medium X varies depending on an amount of the ink.

0039 In the printing apparatus 100, a constant tension is applied to the medium X by the supply section 1, the recovery section 4, and the like, and the thermal energy is applied to the medium X by the first fixing section 31a and the second fixing section 31b in the state.

When the thermal energy is further applied to the medium X on which the print image is fixed, the medium X is softened, thereby making it easy for the medium X to expand and contract.

Specifically, the medium X easily expands in a conveyance direction in which it is pulled, and correspondingly, easily contracts in a width direction.

As a result, for the print medium X1 on which the print image is fixed, the vertical and horizontal sizes of the print image differ from the vertical and horizontal sizes of the print image in the first print data.

0040 A thermal energy is applied by the first fixing section 31a and the second fixing section 31b to a print image based on the data of the portion taken charge of by the first printing section 30a, while a thermal energy is applied by only the second fixing section 31b to a print image based on the data of the portion taken charge of by the second printing section 30b. Accordingly, an influence received from expansion and contraction of the medium X by the print image based on the data of the portion taken charge of by the first printing section 30a and an influence received from expansion and contraction of the medium X by the print image based on the data of the portion taken charge of by the second printing section 30b differ from each other, and respective expansion/contraction ratios also differ from each other.

Therefore, in the printing apparatus 100, the second print data previously considering the expansion and contraction is generated, based on which printing is performed.

0041 The recovery section 4 is a site for recovering the print medium X1 as a recovery roll 40 while winding the print medium X1 around a shaft.

In the recovery section 4, the print medium X1 is sandwiched between a feed roller 41 and a nip roller (not illustrated), and the feed roller 41 is driven to rotate by a driving motor (not illustrated), thereby feeding the print medium X1 into the recovery roll 40 at a constant tension.

0042 The imaging section 5 images the print image side of the print medium X1 to obtain imaging data.

That is, the imaging data is obtained by the imaging section 5 imaging a print image, a mark, and an accessory fixed on the print medium X1.

The imaging section 5 is arranged between the printing-related section 3 and the recovery section 4.

As described above, in the printing-related section 3, the medium X easily expands and contracts. Accordingly, the imaging section 5 is arranged between the printing-related section 3 and the recovery section 4, thereby making it possible to calculate an expansion/contraction ratio sufficiently considering the expansion and contraction of the medium X in the printing-related section 3.

The printing-related section 3 includes the first printing section 30a and the second printing section 30b, so that the imaging section 5 is arranged between the printing-related section 3 and the recovery section 4, thereby making it possible to calculate a first expansion/contraction ratio in the first printing section 30a and a second expansion/contraction ratio in the second printing section 30b from one imaging data.

0043 As the imaging section 5, a scanner sensor is preferably used.

Specifically, as the imaging section 5, a CIS (contact image sensor) and a CCD (charge coupled device) sensor, for example, can be adopted.

Among them, the CIS that is small in size and low in power consumption is preferably adopted as the imaging section 5. 0044 The control section 6 is a site for controlling printing.

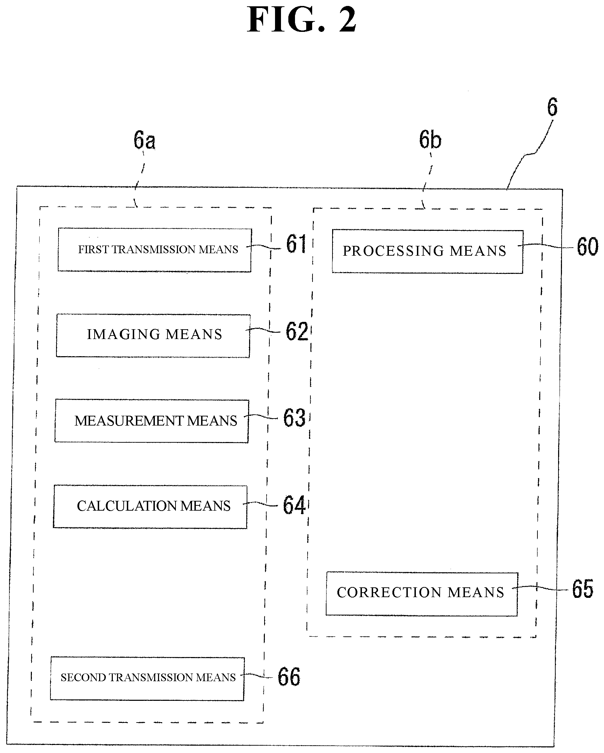

FIG. 2 is a block diagram for describing a control section in the printing apparatus according to the first embodiment.

As illustrated in FIG. 2, the control section 6 includes at least processing means 60, first transmission means 61, imaging means 62, measurement means 63, calculation means 64, correction means 65, and second transmission means 66.

In the control section 6, the first transmission means 61, the imaging means 62, the measurement means 63, the calculation means 64, and the second transmission means 66 are stored in a first computer 6a, and the processing means 60 and the correction means 65 are stored in a second computer 6b.

It is possible to appropriately perform data exchange between the first computer 6a and the second computer 6b by wire or wirelessly.

0045 The processing means 60 is a so-called RIP (raster image processor), and converts submitted original data into a raster image and further converts raster imaging data into print data in such a format that the printing apparatus 100 can perform printing based thereon.

The conversion by the processing means 60 is known, and hence detailed description will be omitted.

0046 The print data includes first print data or the second print data.

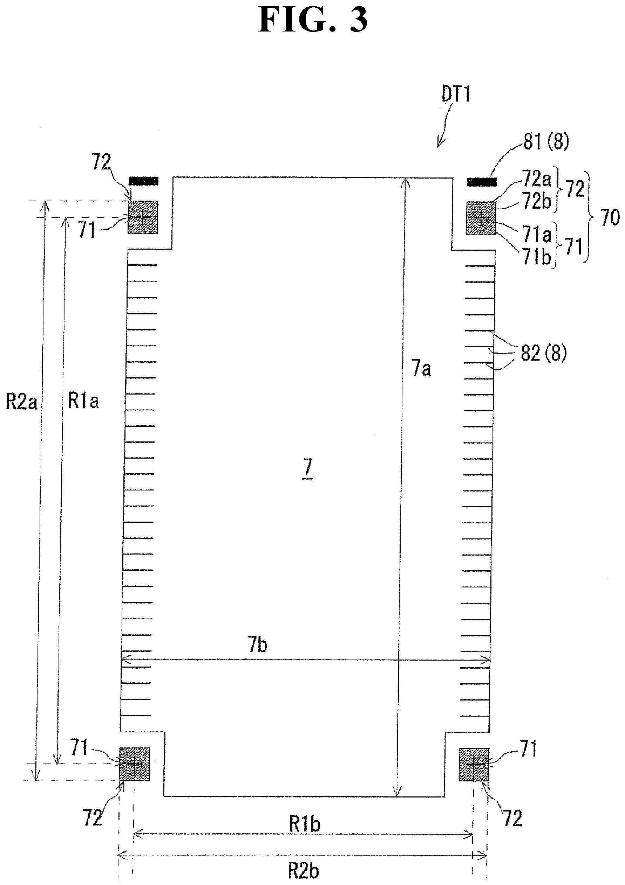

FIG. 3 is a diagram illustrating the first print data based on which printing is performed in the printing apparatus according to the first embodiment.

The second print data will be described below.

As illustrated in FIG. 3, first print data DT1 includes a print image 7, a plurality of marks 70 each including a first mark 71 and a second mark 72, and an accessory 8.

That is, the first print data DT1 is obtained by putting the plurality of marks 70 each including the first mark 71 and the second mark 72 on the print image 7 and further putting the accessory 8 thereon.

In the first print data DT1, it is possible to calculate an expansion/contraction ratio considering an influence of an ink in printing of the print image 7 in the printing-related section 3 by intentionally adding the print image 7 thereto.

0047 The marks 70 are respectively provided at four corners of the print image 7.

As a result, a distance in the conveyance direction and a distance in the width direction can be sufficiently kept, thereby making it possible to calculate the expansion/contraction ratio with higher accuracy.

At the four corners respectively provided with the marks 70, the print image 7 remains notched.

That is, the marks 70 are respectively provided at positions where the four corners of the print image 7 are notched. This makes it easy to detect the marks 70 in the imaging data, thereby making it possible to measure a distance between the marks 70 with higher accuracy.

The marks 70 are not provided outside the print image 7 but provided by notching the print image 7 itself, thereby making it possible to make the size of the print image 7 as large as possible to match the width of the medium X.

0048 At this time, there is provided a sufficient margin between each of the marks 70 and the print image 7.

A shortest distance between each of the marks 70 and the print image 7 is preferably 10 mm or more.

In this case, the marks 70 are easily detected, thereby making it possible to measure the distance between the marks 70 with higher accuracy.

While the size of the medium X may be enlarged in the first fixing section 31a, the second mark 72 can be prevented from overlapping a print of the portion taken charge of by the first printing section 30a in the print image 7 when printed by the second printing section 30b.

0049 The first mark 71 has at least a horizontal line 71a and a vertical line 71b.

Specifically, the first mark 71 has a cross pattern in which the horizontal line 71a and the vertical line 71b intersect each other at their center.

Thus, the first mark 71 is made to have a line shape, thereby making it easy to detect the first mark 71 in the imaging data.

A distance R1a in the conveyance direction can be measured using the horizontal line 71a, and a distance R1b in the width direction can be measured using the vertical line 71b, resulting in an improvement in measurement accuracy.

0050 Similarly, the second mark 72 has at least a horizontal line 72a and a vertical line 72b.

Specifically, the second mark 72 has a rectangular pattern including a pair of horizontal lines 72a and a pair of vertical lines 72b.

Thus, the second mark 72 is made to have a line shape, thereby making it easy to detect the second mark 72 in the imaging data.

A distance R2a in the conveyance direction, described below, can be measured using the horizontal line 72a, and a distance R2b in the width direction, described below, can be measured using the vertical line 72b, resulting in an improvement in measurement accuracy.

0051 The cross pattern of the first mark 71 is printed to be arranged at the center of the rectangular pattern of the second mark 72.

This makes it possible to even visually recognize a deviation of the first mark 71 relative to the second mark 72.

That is, it can be recognized that a positional deviation of the first mark 71 printed by the first printing section 30a due to expansion and contraction of the medium X and a positional deviation of the second mark 72 printed by the second printing section 30b due to expansion and contraction of the medium X differ in degree.

0052 In each of the first mark 71 and the second mark 72, the respective lengths of the horizontal line and the vertical line can be optionally set depending on the size of the print image 7.

When a distance 7a in the conveyance direction of the print image 7 is less than 30 inches, the respective lengths of the horizontal line and the vertical line are preferably the same.

On the other hand, when the distance 7a in the conveyance direction of the print image 7 is 30 inches or more, the length of the vertical line is preferably larger than the length of the horizontal line considering that the medium X greatly expands.

0053 The first mark 71 is preferably printed by one of the line heads 32a in the first printing section 30a, and the second mark 72 is preferably printed by one of the line heads 32b in the second printing section 30b.

In these cases, the occurrence of a printing misalignment between the line heads can be excluded.

That is, the printing misalignment between the line heads 32a can be prevented from being confused with the deviation due to the expansion and contraction of the medium X.

0054 When the first mark 71 and the second mark 72 are printed to overlap each other, a color in which the first printing section 30a prints the first mark 71 and a color in which the second printing section 30b prints the second mark 72 are preferably respectively different colors.

If the first mark 71 and the second mark 72 are not printed to overlap each other, their respective colors may be the same.

If the medium X is transparent, the colors are not limited. However, if the medium X is colored, the colors are preferably different from the color of the medium X.

0055 The accessory 8 has an automatic registration mark (not illustrated), upper refresh lines 81, and intermediate refresh lines 82.

When the automatic registration mark is provided as the accessory 8, registration of the print image 7 can be automatically adjusted.

The automatic registration mark may be automatically expanded and contracted depending on an expansion/contraction ratio described below, or may be added without being expanded and contracted.

The upper refresh lines 81 are respectively provided above the upper left horizontal line 72a (second mark 72) and above the upper right horizontal line 72a (second mark 72), and the plurality of intermediate refresh lines 82 are provided to be equally spaced apart from one another between the upper left horizontal line 72a (second mark 72) and the lower left horizontal line 72a (second mark 72) and between the upper right horizontal line 72a (second mark 72) and the lower right horizontal line 72a (second mark 72).

0056 The plurality of marks 70 and the accessory 8 are printed in the same color. As a result, the upper refresh line 81 or the intermediate refresh line 82 is printed just before the plurality of marks 70 are printed. Therefore, when the plurality of marks 70 are printed, a nozzle can be prevented from being clogged.

Although the upper refresh line 81 and the intermediate refresh line 82 are respectively horizontal lines, their respective shapes are not particularly limited.

The number of intermediate refresh lines 82 and a spacing thereamong are not particularly limited.

0057 Referring to Fig. 2 again, in the control section 6, the first transmission means 61 transmits printing start commands, respectively, to the first printing section 30a and the second printing section 30b on the basis of the first print data DT1 generated by the processing means 60.

Specifically, the printing start command to the first printing section 30a is a command to cause the first printing section 30a to print data of the portion taken charge of by the first printing section 30a in the first print data DT1, and the printing start command to the second printing section 30b is a command to cause the second printing section 30b to print data of the portion taken charge of by the second printing section 30b in the first print data DT1.

The portion taken charge of by the first printing section 30a and the portion taken charge of by the second printing section 30b in the first print data DT1 can be appropriately set in consideration of an ink or the like arranged in each of the printing sections.

0058 In the printing apparatus 100, printing is started by the first printing section 30a and the second printing section 30b, respectively, at previously set timings in response to the printing start commands transmitted by the first transmission means 61.

For example, the printing start command to the first printing section 30a is a command to start printing from a desired printing start location on the medium X.

The printing start command to the second printing section 30b is a command to read a printing start mark (not illustrated) printed by the first printing section 30a and start printing from the printing start location.

0059 The imaging means 62 causes the imaging section 5 to image the print medium X1 on which the first print data DT1 is printed by the first printing section 30a and the second printing section 30b, sets an imaged still image as imaging data, and acquires the imaging data.

The imaging data may be obtained by imaging the still image of the print medium X1 in a timely manner or obtained by imaging a moving image of the print medium X1 to be conveyed once and picking up a still image in the moving image.

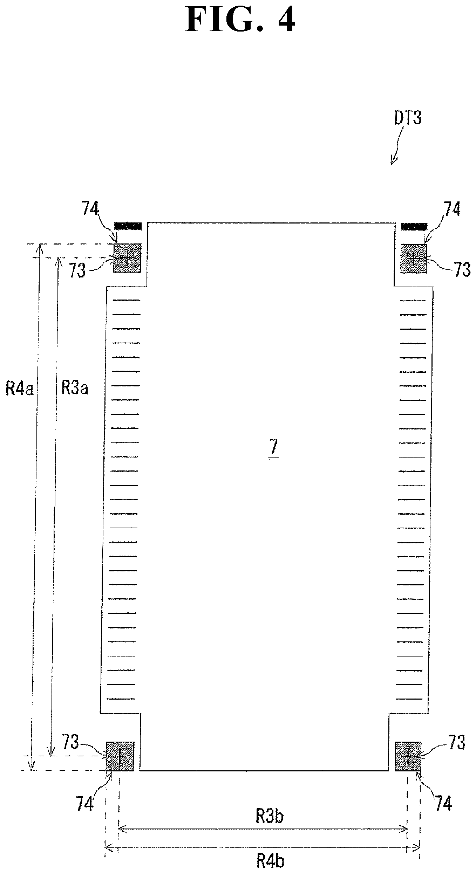

0060 FIG. 4 is a diagram illustrating imaging data in a print medium when printing is performed using first print data illustrated in FIG. 3.

In FIG. 4, description of a misalignment of the print image 7 is omitted.

As illustrated in FIG. 4, the measurement means 63 measures a distance R3a in the conveyance direction between first marks 73 printed by the first printing section 30a and a distance R3b in the width direction between the first marks 73 in imaging data DT3, to acquire a first imaging measurement value including values of the distances.

The measurement means 63 measures a distance R4a in the conveyance direction between second marks 74 printed by the second printing section 30b and a distance R4b in the width direction between the second marks 74 in the imaging data DT3, to acquire a second imaging measurement value including values of the distances.

That is, the first imaging measurement value corresponds to the printing by the first printing section 30a, and the second imaging measurement value corresponds to the printing by the second print section 30b.

If the print medium X1 in the imaging data DT3 is inclined, the imaging data DT3 is subjected to rotation correction, as needed, such that a length direction of the print medium X1 and the conveyance direction match each other.

0061 Each of the first imaging measurement value and the second imaging measurement value may be measured from one imaging data DT3, or may be an average of measurements from a plurality of imaging data DT3.

From the viewpoint of an accuracy of the expansion/contraction ratio, each of the first imaging measurement value and the second imaging measurement value may be preferably an average of measurements from 5 to 100 imaging data DT3.

0062 The calculation means 64 calculates a first expansion/contraction ratio for the first printing section 30a from a first reference measurement value (see FIG. 3) including respective values of the distance R1a in the conveyance direction between the first marks 71 and the distance R1b in the width direction between the first marks 71 in the first print data DT1 and the above-described first imaging measurement value.

The calculation means 64 calculates a second expansion/contraction ratio for the second printing section 30b from a second reference measurement value (see FIG. 3) including respective values of the distance R2a in the conveyance direction between the second marks 72 and the distance R2b in the width direction between the second marks 72 in the first print data DT1 and the above-described second imaging measurement value.

0063 In the calculation means 64, the first expansion/contraction ratio and the second expansion/contraction ratio are calculated as follows.

A first expansion/contraction ratio X11 in the conveyance direction of the first printing section 30a is calculated by X11 = A11 / B11 from a value A11 of the distance R1a in the conveyance direction between the first marks 71 in the first print data DT1 and a value B11 of the distance R3a in the conveyance direction between the first marks 73 in the imaging data DT3.

A first expansion/contraction ratio X12 in the width direction of the first printing section 30a is calculated by X12 = A12 / B12 from a value A12 of the distance R1b in the width direction between the first marks 71 in the first print data DT1 and a value B12 of the distance R3b in the width direction between the first marks 73 in the imaging data DT3.

Thus, the first expansion/contraction ratio, i.e., the first expansion/contraction ratio X11 in the conveyance direction and the first expansion/contraction ratio X12 in the width direction are obtained.

0064 Similarly, a second expansion/contraction ratio X21 in the conveyance direction of the second printing section 30b is calculated by X21 = A21 / B21 from a value A21 of the distance R2a in the conveyance direction between the second marks 72 in the first print data DT1 and a value B21 of the distance R4a in the conveyance direction between second marks 74 in the imaging data DT3.

A second expansion/contraction ratio X22 in the width direction of the second printing section 30b is calculated by X22 = A22 / B22 from a value A22 of the distance R2b in the width direction between the second marks 72 in the first print data DT1 and a value B22 of the distance R4b in the width direction between the second marks 74 in the imaging data DT3.

Thus, the second expansion/contraction ratio, i.e., the second expansion/contraction ratio X21 in the conveyance direction and the second expansion/contraction ratio X22 in the width direction are obtained.

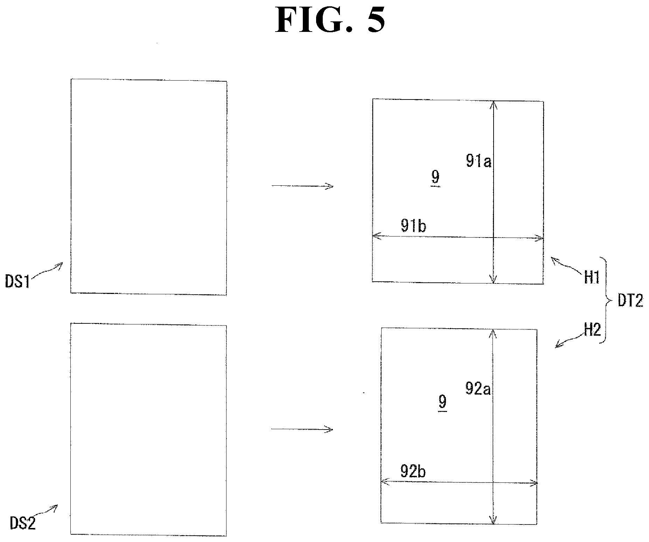

0065 FIG. 5 is a diagram for describing generation of second print data by correction means in the printing apparatus according to the first embodiment.

As illustrated in FIG. 5, the correction means 65 expands and contracts data DS1 of the portion taken charge of by the first printing section 30a in the print image 7 in the first print data DT1 on the basis of the first expansion/contraction ratio to generate first correction data H1, and expands and contracts data DS2 of the portion taken charge of by the second printing section 30b in the print image 7 in the first print data DT1 on the basis of the second expansion/contraction ratio to generate second correction data H2.

That is, second print data DT2 includes the first correction data H1 and the second correction data H2.

Each of the first correction data H1 and the second correction data H2 (the second print data DT2) does not have a mark 70 or the like but has only a print image 9.

Four corners of the print image 9 are not notched.

0066 In the first print data DT1, a distance in the conveyance direction of the data DS1 of the portion taken charge of by the first printing section 30a is the same as the distance 7a in the conveyance direction of the print image 7, and a distance in the width direction of the data DS1 of the portion taken charge of by the first printing section 30a is the same as a distance 7b in the width direction of the print image 7 (see FIG. 3).

In the first print data DT1, a distance in the conveyance direction of the data DS2 of the portion taken charge of by the second printing section 30b is the same as the distance 7a in the conveyance direction in the print image 7, and a distance in the width direction of the data DS2 of the portion taken charge of by the second printing section 30b is the same as the distance 7b in the width direction of the print image 7 (see FIG. 3).

That is, in the first print data DT1, both the respective sizes of the data DS1 of the portion taken charge of by the first printing section 30a and the data DS2 of the portion taken charge of by the second printing section 30b are common to the size of the first print data DT1 (the print image 7) in either the conveyance direction or the width direction.

Therefore, the data DS1 of the portion taken charge of by the first printing section 30a also includes a portion that is not printed by the first printing section 30a, and the data DS2 of the portion taken charge of by the second printing section 30b includes a portion that is not printed by the second printing section 30b.

The respective sizes of the first correction data H1 and the second correction data H2 are expanded and contracted in the conveyance direction and the width direction, and thus do not match the size of the first print data DT1.

0067 In the correction means 65, the print image 9 in each of the first correction data H1 and the second correction data H2 (the second print data DT2) is corrected as follows.

A value D11 of a distance 91a in the conveyance direction in the first correction data H1 is calculated by D11 = C11 × X11 from a value C11 of a distance in the conveyance direction of the data DS1 of the portion taken charge of by the first printing section 30a in the print image 7 in the first print data DT1 and the first expansion/contraction ratio X11 in the conveyance direction.

A value D12 of a distance 91b in the width direction in the first correction data H1 is calculated by D12 = C12 × X12 from a value C12 of a distance in the width direction of the data DS1 of the portion taken charge of by the first printing section 30a in the print image 7 in the first print data DT1 and the first expansion/contraction ratio X12 in the width direction.

0068 The correction means 65 expands or contracts the data DS1 of the portion taken charge of by the first printing section 30a in the print image 7 in the first print data DT1 to correspond to the value D11 of the distance 91a in the conveyance direction in the first correction data H1 and the value D12 of the distance 91b in the width direction in the first correction data H1, to generate the first correction data H1.

0069 Similarly, a value D21 of a distance 92a in the conveyance direction in the second correction data H2 is calculated by D21 = C21 × X21 from a value C21 of a distance in the conveyance direction of the data DS2 of the portion taken charge of by the second printing section 30b in the print image 7 in the first print data DT1 and the second expansion/contraction ratio X21 in the conveyance direction.

A value D22 of a distance 92b in the width direction in the second correction data H2 is calculated by D22 = C22 × X22 from a value C22 of a distance in the width direction of the data DS2 of the portion taken charge of by the second printing section 30b in the print image 7 in the first print data DT1 and the second expansion/contraction ratio X22 in the width direction.

0070 The correction means 65 expands or contracts the data DS2 of the portion taken charge of by the second printing section 30b in the print image 7 in the first print data DT1 to correspond to the value D21 of the distance 92a in the conveyance direction in the second correction data H2 and the value D22 of the distance 92b in the width direction in the second correction data H2, to generate the second correction data H2.

Thus, the second print data DT2 including the first correction data H1 and the second correction data H2 is obtained. 0071 The second transmission means 66 transmits printing start commands, respectively, to the first printing section 30a and the second printing section 30b on the basis of the second print data DT2 generated by the correction means 65.

Specifically, the printing start command to the first printing section 30a is a command to cause the first printing section 30a to print the first correction data H1, and the printing start command to the second printing section 30b is a command to cause the second printing section 30b to print the second correction data H2.

Respective timings of starting printing by the first printing section 30a and the second printing section 30b are the same as a timing of transmission by the first transmission means 61.

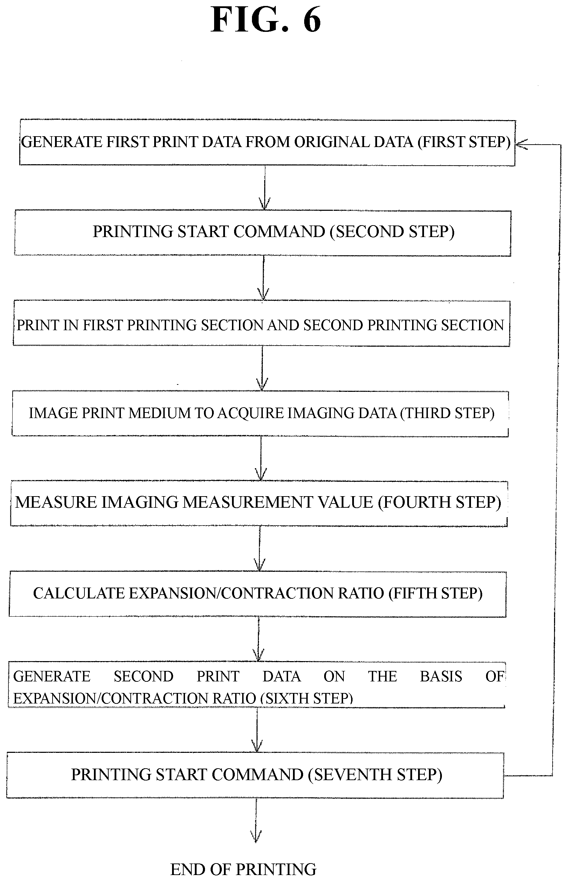

0072 FIG. 6 is a flowchart for describing automatic expansion and contraction correction in the printing apparatus according to the first embodiment.

In the printing apparatus 100, the original data is first inputted to the second computer 6b.

Then, the processing means 60 converts the original data and adds the marks 70 and the accessory 8 thereto, to generate the first print data DT1 (first step).

In the first print data DT1, the respective portions taken charge of by printing by the first printing section 30a and the second printing section 30b are set when the original data is converted.

0073 The printing apparatus 100 is operated, and the first transmission means 61 transmits the printing start commands, respectively, to the first printing section 30a and the second printing section 30b on the basis of the first print data DT1 (second step).

The first printing section 30a and the second printing section 30b that have received the printing start commands start printing on the medium X, respectively, at previously set timings. 0074 Then, the imaging means 62 causes the imaging section 5 to image the print medium X1 that has passed through the printing-related section 3, to acquire the imaging data DT3 (third step).

Such imaging may be performed a plurality of times, as needed.

In the first computer 6a, the measurement means 63 measures the first imaging measurement value and the second imaging measurement value from the imaging data DT3 (fourth step), and the calculation means 64 calculates the first expansion/contraction ratio from the first reference measurement value in the first print data DT1 and the first imaging measurement value and calculates the second expansion/contraction ratio from the second reference measurement value in the first print data DT1 and the second imaging measurement value (fifth step).

0075 Then, in the second computer 6b, the correction means 65 generates the first correction data H1 in the first printing section 30a and the second correction data H2 in the second printing section 30b on the basis of the calculated first expansion/contraction ratio and second expansion/contraction ratio (sixth step). That is, the second print data DT2 is generated.

0076 Then, the second transmission means 66 transmits the printing start command to the first printing section 30a on the basis of the first correction data H1 and transmits the printing start command to the second printing section 30b on the basis of the second correction data H2 (seventh step).

The first printing section 30a and the second printing section 30b that have received the printing start commands start printing on the medium X, respectively, at previously set timings.

After a desired number of prints or prints having a predetermined length based on the first correction data H1 and the second correction data H2 (the second print data DT2) are made, the printing is finished.

0077 In the printing apparatus 100, the automatic expansion and contraction correction is performed through the first step to the seventh step.

After the seventh step, the first step to the seventh step may be repeated, as needed.

If it takes time in performing the third step to the sixth step, the printing may be stopped once.

0078 In the printing apparatus 100, both respective error ranges of a distance in the conveyance direction and a distance in the width direction between the print image 7 in the first print data DT1 and the print image 9 to be printed on the basis of the first correction data H1 and the second correction data H2 (the second print data DT2) are within ± 1.0 mm and preferably within ± 0.1 mm.

That is, in the printing apparatus 100, it is important to set the size of the print image at the time of recovery to a desired size with high accuracy.

This makes it possible to make the size of the print image at the time of recovery substantially match the size of the original print data.

0079 The printing apparatus 100 has an automatic expansion/contraction correction function, as described above. That is, the printing apparatus 100 includes the imaging section 5 and the control section 6, and the control section 6 includes the first transmission means 61, the imaging means 62, the measurement means 63, and the calculation means 64, thereby making it possible to automatically calculate the expansion/contraction ratio. Further, the printing apparatus 100 includes the correction means 65 and the second transmission means 66, thereby making it possible to automatically generate the first correction data H1 and the second correction data H2 (the second print data DT2) by respectively expanding and contracting the print image 7 on the basis of the expansion/contraction ratio.

This makes it possible to exclude a human error in the printing apparatus 100.

Measurement between the first mark 71 and the second mark 72 is performed by the control section 6, resulting in an improvement in measurement accuracy.

Time and effort for a person to perform measurement can be saved, thereby making it possible to improve productivity.

### 0080 (Second Embodiment)

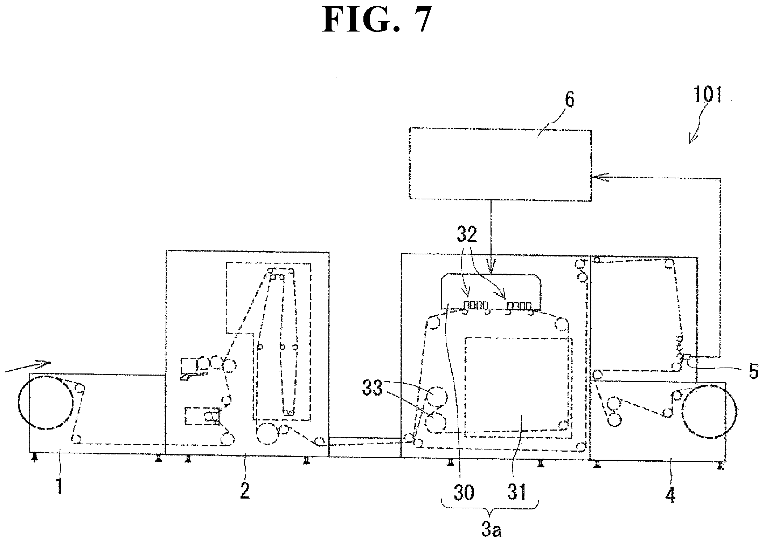

FIG. 7 is a schematic side view illustrating a second embodiment of a printing apparatus according to the present invention.

The printing apparatus according to the second embodiment is an example in which an elongated medium is adopted and a line-type inkjet system is adopted.

As illustrated in FIG. 7, a printing apparatus 101 according to the second embodiment includes a supply section 1 for supplying a medium X, a pretreatment section 2 for subjecting the medium X to pretreatment, a printing-related section 3a including a printing section 30 for printing at least a print image on the medium X on the basis of print data and a fixing section 31 for fixing the print image on the medium X to obtain a print medium X1, a recovery section 4 for recovering the print medium X1, an imaging section 5, arranged between the printing-related section 3a and the recovery section 4, for imaging the print medium X1, and a control section 6 for controlling printing.

That is, the printing apparatus 101 according to the second embodiment is the same as the printing apparatus 100 according to the first embodiment except for the printing-related sections. 0081 The printing-related section 3a includes the printing section 30 for printing a print image, a mark, and the like (first print data described below) or a print image (second print data described below) on the medium X on the basis of the print data, the fixing section 31 for fixing the print image on the medium X by drying to obtain the print medium X1, and a cooling roller 33 for cooling the medium X.

In the printing-related section 3a, the print image printed by the printing section 30 is fixed by the fixing section 31 and is cooled by the cooling roller 33.

0082 The printing section 30 has line heads 32 capable of printing an ink.

As such an ink, water-based ink, an oil-based ink, or the like is used.

A color is not particularly limited.

The fixing section 31 is a hot air dryer that blows hot air onto the medium X to which the print image is applied and fixes the print image.

Accordingly, the fixing section 31 applies a thermal energy sufficient to dry the ink to the medium X.

At this time, a liquid component contained in the ink vaporizes by absorbing a predetermined thermal energy.

That is, an amount of the thermal energy to be applied to the medium X varies depending on an amount of the ink.

0083 In the printing apparatus 101, a constant tension is applied to the medium X by the supply section 1, the recovery section 4, and the like, and the thermal energy is applied to the medium X by the fixing section 31 in the state.

When the thermal energy is further applied to the medium X on which the print image is fixed, the medium X is softened, thereby making it easy for the medium X to expand and contract.

Specifically, the medium X easily expands in a conveyance direction in which it is pulled, and correspondingly, easily contracts in a width direction.

As a result, for the print medium X1 on which the print image is fixed, the vertical and horizontal sizes of the print image differ from the vertical and horizontal sizes of the print image in first print data.

0084 The supply section 1, the pretreatment section 2, the recovery section 4, and the imaging section 5 are respectively the same as the supply section 1, the pretreatment section 2, the recovery section 4, and the imaging section 5 in the printing apparatus 100 according to the first embodiment, and hence descriptions thereof will be omitted.

The imaging section 5 is arranged between the printing-related section 3a and the recovery section 4.

0085 The control section 6 includes at least processing means 60, first transmission means 61, imaging means 62, measurement means 63, calculation means 64, correction means 65, and second transmission means 66, similarly to the control section 6 in the printing apparatus 100 according to the first embodiment, the first transmission means 61, the imaging means 62, the measurement means 63, the calculation means 64, and the second transmission means 66 are stored in a first computer 6a, and the processing means 60 and the correction means 65 are stored in a second computer 6b (see FIG. 2).

0086 The processing means 60 is a so-called RIP (raster image processor), and converts submitted original data into a raster image and further converts raster imaging data into print data in such a format that the printing apparatus 101 can perform printing based thereon.

0087 The print data includes first print data or second print data.

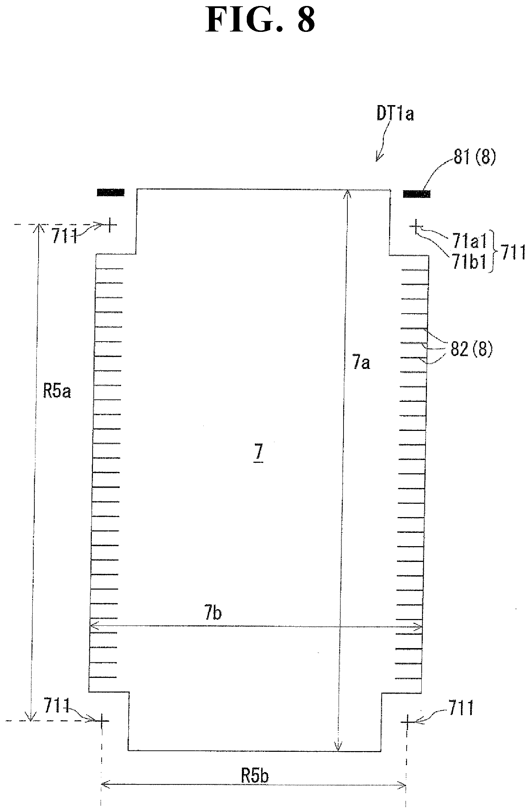

FIG. 8 is a diagram illustrating the first print data based on which printing is performed in the printing apparatus according to the second embodiment.

As illustrated in FIG. 8, first print data DT1a includes a print image 7, marks 711 respectively provided at four notched corners of the print image 7, and an accessory 8 having at least an upper refresh line 81 and an intermediate refresh line 82.

That is, the first print data DT1a is the same as the first print data DT1 in the printing apparatus 100 according to the first embodiment except that it does not have the second mark 72. In this case, the mark 711 corresponds to the first mark 71. 0088 The printing apparatus 101 according to the second embodiment includes only one printing section 30 and only one fixing section 31, so that the marks 711 provided at the four corners may be of a single type.

In other words, the number of types of marks may be at least a number corresponding to the number of units including the printing section 30 and the fixing section 31.

0089 Each of the marks 711 has at least a horizontal line 71a1 and a vertical line 71b1.

Specifically, the mark 711 has a cross pattern in which the horizontal line 71a1 and the vertical line 71b1 intersect each other at their center.

Thus, the mark 711 is made to have a line shape, thereby making it easy to detect the mark 711 in the imaging data.

A distance R5a in the conveyance direction can be measured using the horizontal line 71a1, and a distance R5b in the width direction can be measured using the vertical line 71b1, resulting an improvement in measurement accuracy.

0090 The mark 711 is preferably printed by one of the line heads 32 in the printing section 30.

In this case, the occurrence of a printing misalignment between the line heads 32 can be excluded.

That is, the printing misalignment between the line heads can be prevented from being confused with a deviation due to expansion and contraction of the medium X. Although the respective colors of the marks 711 are not limited, the colors preferably differ from the color of the medium X if the medium X is colored.

0091 In the control section 6, the first transmission means 61 transmits a printing start command to the printing section 30 on the basis of the first print data DT1a generated by the processing means 60.

In the printing apparatus 101, printing is started by the printing section 30 at a previously set timing in response to the printing start command transmitted by the first transmission means 61.

For example, the printing start command to the printing section 30 is a command to start printing from a desired printing start location on the medium X.

0092 The imaging means 62 causes the imaging section 5 to image the print medium X1 on which the first print data DT1a is printed by the printing section 30, sets an imaged still image as imaging data, and acquires the imaging data.

The imaging data may be obtained by imaging the still image of the print medium X1 in a timely manner or obtained by imaging a moving image of the print medium X1 to be conveyed once and picking up a still image in the moving image.

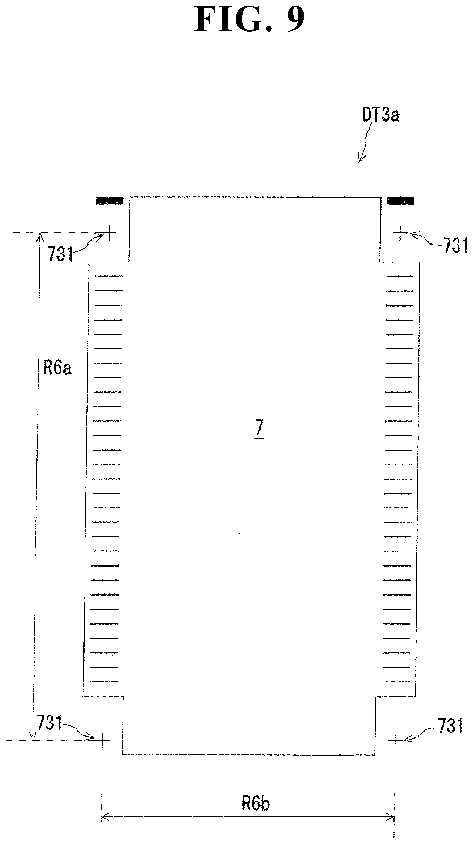

0093 FIG. 9 is a diagram illustrating imaging data in a print medium when printing is performed using first print data illustrated in FIG. 8.

In FIG. 9, description of a misalignment of the print image 7 is omitted.

As illustrated in FIG.9, the measurement means 63 measures a distance R6a in the conveyance direction between marks 731 printed by the printing section 30 and a distance R6b in the width direction between the marks 731 in imaging data DT3a, to acquire an imaging measurement value including values of the distances.

If the print medium X1 in the imaging data DT3a is inclined, the imaging data DT3a is subjected to rotation correction, as needed, such that a length direction of the print medium X1 and the conveyance direction match each other.

The imaging measurement value may be measured from one imaging data DT3a, or may be an average of measurements from a plurality of imaging data DT3a.

0094 The calculation means 64 calculates an expansion/contraction ratio for the printing section 30 from a reference measurement value (see FIG. 8) including respective values of the distance R5a in the conveyance direction between the marks 711 and the distance R5b in the width direction between the marks 711 in the print data DT1a and the above-described imaging measurement value.

0095 In the calculation means 64, the expansion/contraction ratio is calculated as follows.

An expansion/contraction ratio X1 in the conveyance direction of the printing section 30 is calculated by X1 = A1 / B1 from a value A1 of the distance R5a in the conveyance direction between the marks 711 in the print data DT1a and a value B1 of the distance R6a in the conveyance direction between the marks 731 in the imaging data DT3a.

An expansion/contraction ratio X2 in the width direction of the printing section 30 is calculated by X2 = A2 / B2 from a value A2 of the distance R5b in the width direction between the marks 711 in the print data DT1a and a value B2 of the distance R6b in the width direction between the marks 731 in the imaging data DT3a.

Thus, the expansion/contraction ratio, i.e., the expansion/contraction ratio X1 in the conveyance direction and the expansion/contraction ratio X2 in the width direction are obtained.

0096 The correction means 65 expands and contracts the print image 7 in the first print data DT1a on the basis of the expansion/contraction ratio to generate second print data.

The second print data does not have the mark 711 or the like but has only the print image.

Four corners of the print image are not notched.

0097 In the correction means 65, the print image in the second print data is corrected as follows.

A value D1 of a distance in the conveyance direction of the print image in the second print data is calculated by D1 = C1 × X1 from a value C1 of a distance 7a in the conveyance direction of the print image 7 in the first print data DT1a and the expansion/contraction ratio X1 in the conveyance direction.

A value D2 of a distance in the width direction of the print image in the second print data is calculated by D2 = C2 × X2 from a value C2 of a distance 7b in the width direction of the print image 7 in the first print data DT1a and the expansion/contraction ratio X2 in the width direction.

0098 The correction means 65 expands or contracts the print image 7 in the first print data DT1a to correspond to the value D1 of the distance in the conveyance direction of the print image in the second print data and the value D2 of the distance in the width direction of the print image in the second print data, to generate the second print data.

0099 The second transmission means 66 transmits a printing start command to the printing section 30 on the basis of the second print data generated by the correction means 65.

A timing of starting printing by the printing section 30 is the same as a timing of transmission by the first transmission means 61.

0100 Automatic expansion and contraction correction in the printing apparatus 101 according to the second embodiment is performed similarly to the automatic expansion and contraction correction in the printing apparatus 100 according to the first embodiment.

In the printing apparatus 101, the automatic expansion and contraction correction is performed by reading "first printing section and second printing section" in a flowchart illustrated in FIG. 6 as "printing section".

0101 In the printing apparatus 101, the original data is first inputted to the second computer 6b.

Then, the processing means 60 converts the original data and adds the marks 711 and the accessory 8 thereto, to generate the first print data DT1a (first step).

0102 The printing apparatus 101 is operated, and the first transmission means 61 transmits a printing start command to the printing section 30 on the basis of the first print data DT1a (second step).

The printing section 30 that has received the printing start command starts printing on the medium X at a previously set timing.

0103 Then, the imaging means 62 causes the imaging section 5 to image the print medium X1 that has passed through the printing-related section 3a, to acquire the imaging data DT3a (third step) .

Such imaging may be performed a plurality of times, as needed.

In the first computer 6a, the measurement means 63 measures the imaging measurement value from the imaging data DT3 (fourth step), and the calculation means 64 calculates the expansion/contraction ratio from the reference measurement value in the first print data DT1a and the imaging measurement value (fifth step) .

0104 Then, in the second computer 6b, the correction means 65 generates the second print data on the basis of the calculated expansion/contraction ratio (sixth step).

0105 Then, the second transmission means 66 transmits the printing start command to the printing section 30 on the basis of the second print data (seventh step).

The printing section 30 that has received the printing start command starts printing on the medium X at a previously set timing.

After a desired number of prints or prints having a predetermined length based on the second print data are made, the printing is finished.

0106 In the printing apparatus 101, the automatic expansion and contraction correction is performed through the first step to the seventh step.

After the seventh step, the first step to the seventh step may be repeated, as needed.

If it takes time in performing the third step to the sixth step, the printing may be stopped once.

0107 In the printing apparatus 101, both respective error ranges of a distance in the conveyance direction and a distance in the width direction between the print image 7 in the first print data DT1a and a print image to be printed on the basis of the second print data are within ± 1.0 mm and preferably within ± 0.1 mm.

That is, in the printing apparatus 101, it is important to set the size of the print image at the time of recovery to a desired size with high accuracy.

This makes it possible to make the size of the print image at the time of recovery substantially match the size of the original print data.

0108 The printing apparatus 101 has an automatic expansion/contraction correction function, as described above.

That is, the printing apparatus 101 includes the imaging section 5 and the control section 6, and the control section 6 includes the first transmission means 61, the imaging means 62, the measurement means 63, and the calculation means 64, thereby making it possible to automatically calculate the expansion/contraction ratio. Further, the printing apparatus 101 includes the correction means 65 and the second transmission means 66, thereby making it possible to automatically generate the second print data by expanding and contracting the print image 7 on the basis of the expansion/contraction ratio.

This makes it possible to exclude a human error in the printing apparatus 101.

Measurement between the marks 711 is performed by the control section 6, resulting in an improvement in measurement accuracy.

Time and effort for a person to perform measurement can be saved, thereby making it possible to improve productivity.

0109 Although the preferred embodiments of the present invention have been described above, the present invention is not limited to the above-described embodiments.

0110 Although the printing apparatus 100 according to the first embodiment includes the supply section 1, the pretreatment section 2, the printing-related section 3, the recovery section 4, the imaging section 5, and the control section 6, the pretreatment section 2 is not essential.

That is, in the pretreatment section 2, the ink receiving layer is formed on the medium X, but a medium previously provided with an ink receiving layer may be adopted as the medium X.

The same applies to the printing apparatus 101 according to the second embodiment.

0111 Although the printing apparatus 100 according to the first embodiment includes a unit of the first printing section 30a and the first fixing section 31a and a unit of the second printing section 30b and the second fixing section 31b, and the printing apparatus 101 according to the second embodiment includes a unit of the printing section 30 and the fixing section 31, the number of units may be three or more.

0112 Although in the printing apparatus 100 according to the first embodiment, a water-based ink, an oil-based ink, or the like is used in the first printing section 30a and the second printing section 30b, the present invention is not limited to this, but an energy ray curable ink such as a UV curable ink or an electron beam curable ink can also be used.

In this case, an energy ray irradiator is used instead of the hot air dryer as the first fixing section 31a and the second fixing section 31b.

In this case, the medium X may also be deformed because the volume thereof changes on the basis of curing of the energy ray curable ink.

The same applies to the printing apparatus 101 according to the second embodiment.

0113 In the printing apparatus 100 according to the first embodiment, the imaging section 5 images the print image side of the print medium X1, but may image both surfaces thereof.

The same applies to the printing apparatus 101 according to the second embodiment.

0114 In the printing apparatus 100 according to the first embodiment, the recovery section 4 recovers the print medium X1 as the recovery roll 40 while winding the print medium X1 around a shaft, but may recover the print medium X1 by so-called shaking.

The same applies to the printing apparatus 101 according to the second embodiment.

0115 Although in the printing apparatus 100 according to the first embodiment, the first transmission means 61, the imaging means 62, the measurement means 63, the calculation means 64, and the second transmission means 66 are stored in the first computer 6a, and the processing means 60 and the correction means 65 are stored in the second computer 6b, the number of computers to be used to store them is not particularly limited.

The computers are general and each include an input unit, a calculation unit, a storage unit, an output unit, and the like.

The same applies to the printing apparatus 101 according to the second embodiment.

0116 Although in the printing apparatus 100 according to the first embodiment, the expansion/contraction ratio is calculated for each unit of a printing section and a fixing section, the expansion/contraction ratio can also be calculated for each ink to be used.

In this case, the correction data is generated for each ink.

The same applies to the printing apparatus 101 according to the second embodiment.

0117 Although in the printing apparatus 100 according to the first embodiment, the first print data DT1 includes the print image 7, the plurality of marks 70 each including the first mark 71 and the second mark 72, and the accessory 8, the accessory 8 is not essential.

The same applies to the printing apparatus 101 according to the second embodiment.

0118 Although in the printing apparatus 100 according to the first embodiment, the first mark 71 has the cross pattern in which the horizontal line 71a and the vertical line 71b intersect each other at their center, and the second mark 72 has the rectangular pattern including the pair of horizontal lines 72a and the pair of vertical lines 72b (see FIG. 3), the present invention is not limited to these.

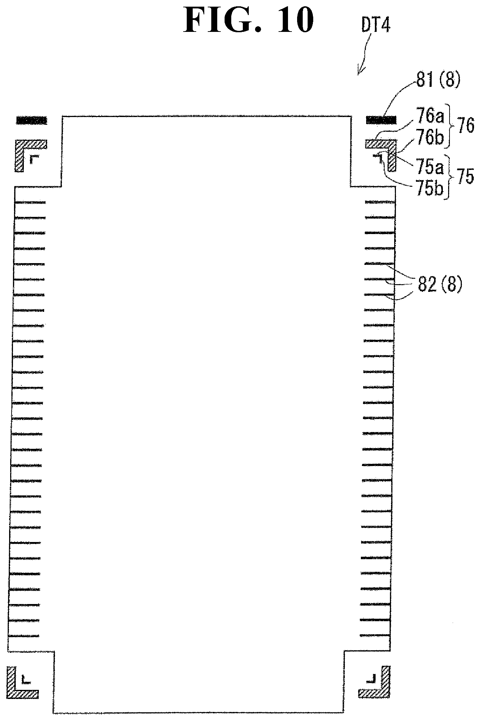

0119 FIG. 10 is a diagram illustrating first print data based on which printing is performed in a printing apparatus according to another embodiment.

As illustrated in FIG. 10, in a first print data DT4, a first mark 75 has an inverted L pattern in which a horizontal line 75a and a vertical line 75b are connected to each other at their respective ends, and a second mark 76 has an inverted L pattern in which a horizontal line 76a and a vertical line 76b are connected to each other at their respective ends.

In this case, a distance in a conveyance direction can be measured using the horizontal line 75a, a distance in a width direction can be measured using the vertical line 75b, a distance in the conveyance direction can be measured using the horizontal line 76a, and a distance in the width direction can be measured using the vertical line 76b.

The same applies to the printing apparatus 101 according to the second embodiment.

0120 In the printing apparatus 100 according to the first embodiment, the first to sixth steps may be performed as a preparation stage of product processing, or may be simultaneously performed during product processing.

In the latter case, automatic expansion and contraction correction is performed for each predetermined period, thereby making it possible to make the size of a print image at the time of recovery (the size of a print image of a product) match the size of original print data with good yield and stably.

The same applies to the printing apparatus 101 according to the second embodiment.

0121 The printing apparatus according to the present invention can be used as an apparatus for applying a print image on a medium on the basis of print data.

With the printing apparatus according to the present invention, the size of a print image at the time of recovery can be made to substantially match the size of original print data using an automatic expansion/contraction function.

### REFERENCE SIGNS LIST

0122 1...supply section
100, 101...printing apparatus
11...feed roller
2... pretreatment section
20...corona treatment device
21...coater treatment device
22...dryer
23, 33, 33a, 33b...cooling roller
3, 3a...printing-related section
30...printing section
30a...first printing section
30b...second printing section
31...fixing section
31a...first fixing section
31b...second fixing section
32, 32a, 32b...line head
4...recovery section
41...feed roller
5...imaging section
6...control section
6a...first computer
6b...second computer
60...processing means
61...first transmission means
62...imaging means
63...measurement means
64...calculation means
65...correction means
66...second transmission means
7, 9...print image
70...mark
71, 711, 73, 75..first mark
71a, 71a1, 72a, 75a, 76a... horizontal line
71b, 71b1, 72b, 75b, 76b... vertical line
72, 74, 76...second mark
7a, 91a, 92a, R1a, R2a, R3a, R4a, R5a, R6a... distance in conveyance direction
7b, 91b, 92b, R1b, R2b, R3b, R4b, R5b, R6b... distance in width direction
8...accessory
81...upper refresh line
82...intermediate refresh line
DS1...data of portion taken charge of by first printing section in first print data DT1
DS2...data of portion taken charge of by second printing section in first print data DT1
DT1, DT1a, DT4...first print data
DT2...second print data
DT3, DT3a... imaging data
H1...first correction data
H2...second correction data
X...medium
X1...print medium

## Claims

1. A printing apparatus (100, 101) comprising:
a supply section (1) for supplying a medium (X);
a printing-related section (3, 3a) including a printing section (30) for printing at least a print image (7, 9) on the medium (X) on the basis of print data and a fixing section (31) for fixing the print image (7, 9) on the medium (X) to obtain a print medium (X1);
a recovery section (4) for recovering the print medium (X1) ;
an imaging section (5), arranged between the printing-related section (3, 3a) and the recovery section (4), for imaging the print medium (X1); and
a control section (6) for controlling the printing, wherein
the print data is first print data (DT1, DT1a, DT4) or second print data (DT2),
the control section (6) includes at least
first transmission means (61) for transmitting a printing start command to the printing section (30) on the basis of first print data (DT1, DT1a, DT4) having a plurality of marks (70) put on the print image (7, 9),
imaging means (62) for causing the imaging section (5) to image the print medium (X1) to acquire imaging data (DT3, DT3a),
measurement means (63) for measuring a distance in a conveyance direction between the marks (70) and a distance in a width direction between the marks (70) in the imaging data (DT3, DT3a), to acquire an imaging measurement value including respective values of the distances,
calculation means (64) for calculating an expansion/contraction ratio from a reference measurement value including respective values of a distance in the conveyance direction between the marks (70) and a distance in the width direction between the marks (70) in the first print data (DT1, DT1a, DT4) and the imaging measurement value,
correction means (65) for expanding and contracting the print image (7, 9) on the basis of the expansion/contraction ratio to generate the second print data (DT2), and
second transmission means (66) for transmitting a printing start command to the printing section (30) on the basis of the second print data (DT2), and
both respective error ranges of a distance in the conveyance direction and a distance in the width direction between the print image (7, 9) in the first print data (DT1, DT1a, DT4) and the print image (7, 9) printed on the basis of the second print data (DT2) are within ± 1.0 mm.

2. The printing apparatus (100, 101) according to claim 1, wherein
the calculation means (64)
calculates the expansion/contraction ratio (X1) in the conveyance direction by X1 = A1 / B1 from a value (A1) of the distance in the conveyance direction between the marks (70) in the first print data (DT1, DT1a, DT4) and a value (B1) of the distance in the conveyance direction between the marks (70) in the imaging data (DT3, DT3a), and
calculates the expansion/contraction ratio (X2) in the width direction by X2 = A2 / B2 from a value (A2) of the distance in the width direction between the marks (70) in the first print data (DT1, DT1a, DT4) and a value (B2) of the distance in the width direction between the marks (70) in the imaging data (DT3, DT3a), and
the correction means (65)
calculates a value (D1) of a distance in the conveyance direction of the print image (7, 9) in the second print data (DT2) by D1 = C1 × X1 from a value (C1) of a distance in the conveyance direction of the print image (7, 9) in the first print data (DT1, DT1a, DT4) and the expansion/contraction ratio (X1) in the conveyance direction,
calculates a value (D2) of a distance in the width direction of the print image (7, 9) in the second print data (DT2) by D2 = C2 × X2 from a value (C2) of a distance in the width direction of the print image (7, 9) in the first print data (DT1, DT1a, DT4) and the expansion/contraction ratio (X2) in the width direction, and
expands or contracts the print image (7, 9) in the first print data (DT1, DT1a, DT4) to correspond to the value (D1) of the distance in the conveyance direction of the print image (7, 9) in the second print data (DT2) and the value (D2) of the distance in the width direction of the print image (7, 9) in the second print data (DT2), to generate the second print data (DT2).

3. A printing apparatus (100, 101) comprising:
a supply section (1) for supplying a medium (X);
a printing-related section (3, 3a) including a first printing section (30a) and a second printing section (30b) for printing at least a print image (7, 9) on the medium (X) on the basis of print data and a first fixing section (31a) and a second fixing section (31b) for fixing the print image (7, 9) on the medium (X) to obtain a print medium (X1);
a recovery section (4) for recovering the print medium (X1) ;
an imaging section (5), arranged between the printing-related section (3, 3a) and the recovery section (4), for imaging the print medium (X1); and
a control section (6) for controlling the printing, wherein
the first printing section (30a), the first fixing section (31a), the second printing section (30b), and the second fixing section (31b) are arranged in this order from the upstream side in the printing-related section (3, 3a),
the print data is first print data (DT1, DT1a, DT4) or second print data (DT2) including first correction data (H1) or second correction data (H2),
the control section (6) includes at least
first transmission means (61) for transmitting printing start commands, respectively, to the first printing section (30a) and the second printing section (30b) on the basis of first print data (DT1, DT1a, DT4) having a plurality of marks (70) each including a first mark (71, 711, 73, 75) and a second mark (72, 74, 76) put on the print image (7, 9),
imaging means (62) for causing the imaging section (5) to image the print medium (X1) to acquire imaging data (DT3, DT3a),
measurement means (63) for measuring a distance in a conveyance direction between the first marks (71, 711, 73, 75) printed by the first printing section (30a) and a distance in a width direction between the first marks (71, 711, 73, 75) in the imaging data (DT3, DT3a) to acquire a first imaging measurement value including respective values of the distances, and measuring a distance in the conveyance direction between the second marks (72, 74, 76) printed by the second printing section (30b) and a distance in the width direction between the second marks (72, 74, 76) in the imaging data (DT3, DT3a) to acquire a second imaging measurement value including respective values of the distances,
calculation means (64) for calculating a first expansion/contraction ratio for the first printing section (30a) from a first reference measurement value including respective values of a distance in the conveyance direction between the first marks (71, 711, 73, 75) and a distance in the width direction between the first marks (71, 711, 73, 75) in the first print data (DT1, DT1a, DT4) and the first imaging measurement value and calculating a second expansion/contraction ratio for the second printing section (30b) from a second reference measurement value including respective values of a distance in the conveyance direction between the second marks (72, 74, 76) and a distance in the width direction between the second marks (72, 74, 76) in the first print data (DT1, DT1a, DT4) and the second imaging measurement value,
correction means (65) for expanding and contracting data of a portion taken charge of by the first printing section (30a) in the print image (7, 9) on the basis of the first expansion/contraction ratio to generate the first correction data (H1) and expanding or contracting data of a portion taken charge of by the second printing section (30b) in the print image (7, 9) on the basis of the second expansion/contraction ratio to generate the second correction data (H2), and
second transmission means (66) for transmitting a printing start command to the first printing section (30a) on the basis of the first correction data (H1) and transmitting a printing start command to the second printing section (30b) on the basis of the second correction data (H2), and
both respective error ranges of a distance in the conveyance direction and a distance in the width direction between the print image (7, 9) in the first print data (DT1, DT1a, DT4) and the print image (7, 9) printed on the basis of the second print data (DT2) are within ± 1.0 mm.

4. The printing apparatus (100, 101) according to claim 3, wherein
the calculation means (64)
calculates the first expansion/contraction ratio (X11) in the conveyance direction by X11 = A11 / B11 from a value (A11) of the distance in the conveyance direction between the first marks (71, 711, 73, 75) in the first print data (DT1, DT1a, DT4) and a value (B11) of the distance in the conveyance direction between the first marks (71, 711, 73, 75) in the imaging data (DT3, DT3a),
calculates the first expansion/contraction ratio (X12) in the width direction by X12 = A12 / B12 from a value (A12) of the distance in the width direction between the first marks (71, 711, 73, 75) in the first print data (DT1, DT1a, DT4) and a value (B12) of the distance in the width direction between the first marks (71, 711, 73, 75) in the imaging data (DT3, DT3a),
calculates the second expansion/contraction ratio (X21) in the conveyance direction by X21 = A21 / B21 from a value (A21) of the distance in the conveyance direction between the second marks (72, 74, 76) in the first print data (DT1, DT1a, DT4) and a value (B21) of the distance in the conveyance direction between the second marks (72, 74, 76) in the imaging data (DT3, DT3a), and
calculates the second expansion/contraction ratio (X22) in the width direction by X22 = A22 / B22 from a value (A22) of the distance in the width direction between the second marks (72, 74, 76) in the first print data (DT1, DT1a, DT4) and a value (B22) of the distance in the width direction between the second marks (72, 74, 76) in the imaging data (DT3, DT3a), and
the correction means (65)
calculates a value (D11) of a distance in the conveyance direction of the print image (7, 9) in the first correction data (H1) by D11 = C11 × X11 from a value (C11) of a distance in the conveyance direction of data of a portion taken charge of by the first printing section (30a) in the print image (7, 9) in the first print data (DT1, DT1a, DT4) and the first expansion/contraction ratio (X11) in the conveyance direction,
calculates a value (D12) of a distance in the width direction of the print image (7, 9) in the first correction data (H1) by D12 = C12 × X12 from a value (C12) of a distance in the width direction of the data of the portion taken charge of by the first printing section (30a) in the print image (7, 9) in the first print data (DT1, DT1a, DT4) and the first expansion/contraction ratio (X12) in the width direction,
expands or contracts the data of the portion taken charge of by the first printing section (30a) in the print image (7, 9) in the first print data (DT1, DT1a, DT4) to correspond to the value (D11) of the distance in the conveyance direction of the print image (7, 9) in the first correction data (H1) and the value (D12) of the distance in the width direction of the print image (7, 9) in the first correction data (H1) to generate the first correction data (H1),
calculates a value (D21) of a distance in the conveyance direction of the print image (7, 9) in the second correction data (H2) by D21 = C21 × X21 from a value (C21) of a distance in the conveyance direction of data of a portion taken charge of by the second printing section (30b) in the print image (7, 9) in the first print data (DT1, DT1a, DT4) and the second expansion/contraction ratio (X21) in the conveyance direction,
calculates a value (D22) of a distance in the width direction of the print image (7, 9) in the second correction data (H2) by D22 = C22 × X22 from a value (C22) of a distance in the width direction of the data of the portion taken charge of by the second printing section (30b) in the print image (7, 9) in the first print data (DT1, DT1a, DT4) and the second expansion/contraction ratio (X22) in the width direction, and
expands or contracts the data of the portion taken charge of by the second printing section (30b) in the print image (7, 9) in the first print data (DT1, DT1a, DT4) to correspond to the value (D21) of the distance in the conveyance direction of the print image (7, 9) in the second correction data (H2) and the value (D22) of the distance in the width direction of the print image (7, 9) in the second correction data (H2) to generate the second correction data (H2).

5. The printing apparatus (100, 101) according to claim 1 or 3, wherein the marks (70) are respectively provided at four corners of the print image (7, 9) in the first print data (DT1, DT1a, DT4).

6. The printing apparatus (100, 101) according to claim 1 or 3, wherein the marks (70) are respectively provided at positions of the four notched corners of the print image (7, 9) in the first print data (DT1, DT1a, DT4).

7. The printing apparatus (100, 101) according to claim 3, wherein
the marks (70) are respectively provided at positions of the four notched corners of the print image (7, 9),
a margin is provided between each of the marks (70) and the print image (7, 9), and
a shortest distance between each of the marks (70) and the print image (7, 9) is 10 mm or more.

8. The printing apparatus (100, 101) according to claim 1 or 3, wherein
each of the marks (70) includes at least
a horizontal line (71a, 71a1, 72a, 75a, 76a) for measuring a distance in the conveyance direction, and
a vertical line (71b, 71b1, 72b, 75b, 76b) for measuring a distance in the width direction.

9. The printing apparatus (100, 101) according to claim 8, wherein
the first print data (DT1, DT1a, DT4) is obtained by putting a plurality of marks (70) and an accessory (8) on the print image (7, 9),
the accessory (8) includes
an upper refresh line (81) provided above the horizontal line (71a, 71a1, 72a, 75a, 76a) on the upper side,
a plurality of intermediate refresh lines (82) equally spaced apart from one another between the horizontal line (71a, 71a1, 72a, 75a, 76a) on the upper side and the horizontal line (71a, 71a1, 72a, 75a, 76a) on the lower side, and
the plurality of marks (70) and the accessory (8) are printed in the same color.
